# EUROPEAN PATENT APPLICATION

(11) **EP 4 664 889 A1**
(43) Date of publication of application: **17.12.2025**
(21) Application number: 25181851.4
(22) Date of filing: 10.06.2025
(51) Int. Cl.: H04N 19/463, G06T 15/00, G06T 15/06, H04N 19/597, H04N 19/60, H04N 19/625

(54) **METHOD AND SYSTEM FOR STORING MATERIAL PROPERTIES FOR USE IN SPECTRAL RENDERING**

(30) Priority: 14.06.2024 GB 202408564
(71) Applicant: Sony Interactive Entertainment Inc., Tokyo 108-0075 (JP)
(72) Inventor: SMITH, Alexei Ashton Derek, London, W1F 7LP (GB)
(74) Representative: Gill Jennings & Every LLP

(57) **Abstract**

A computer implemented method for compressing a refractive index curve for use in spectral rendering, the method comprising: providing a refractive index curve for a material to be rendered within a virtual environment, the refractive index curve encoding the variation of the refractive index with frequency; applying a Fourier transform to the refractive index curve to obtain a time domain refractive index curve; applying a compression technique to the time domain curve to obtain a compressed time domain curve; storing the compressed time domain curve for use in spectral rendering. Since most of the important relevant variation in a time domain refractive index curve is confined to a small part of the curve, compression techniques may be readily applied to reduce the amount of data that may be stored, freeing up memory for other memory intensive aspects of the graphics rendering pipeline.

## Description

### FIELD OF THE INVENTION

The present invention is in the field of video gaming systems and relates to methods and system for storing material properties for performing spectral rendering.

### BACKGROUND

The development of modern video games has seen continuous advances in graphical complexity and realism, driven by ongoing improvements in hardware, software and rendering techniques. These advances have enabled developers to create increasingly immersive and visually striking gaming experiences. Traditionally video games have modeled the interaction of light with a virtual environment using RGB rendering, using red, green and blue wavelengths to render a scene. This simplified approach results in some inaccuracies in the appearance of certain scenes, due to the absence of spectral effects that are particularly noticeable in reflective materials such as water and metals, and materials that have reflectance and transmittance properties that vary significantly with the wavelength of light. For this reason, more recently video games have increasingly applied spectral rendering techniques, in which a larger spectrum of wavelengths is used to model the interaction of light with a scene.

Spectral rendering techniques are capable of producing highly realistic detailed scenes, but they place significant demand on both processing and storage requirements. In particular, the requirement to model a large number of different wavelengths significantly increases the processing demands and the requirement to store a number of material properties and their variation with wavelengths vastly increases the amount of data that needs to be stored for the objects within a scene to be rendered.

There is accordingly a need for a method that makes progress in addressing these issues, and provides more efficient methods of performing spectral rendering.

### SUMMARY OF INVENTION

In a first aspect of the invention there is provided a computer implemented method for compressing a refractive index curve for use in spectral rendering, the method comprising: providing a refractive index curve for a material to be rendered within a virtual environment, the refractive index curve encoding the variation of the refractive index with frequency; applying a Fourier transform to the refractive index curve to obtain a time domain refractive index curve; applying a compression technique to the time domain curve to obtain a compressed time domain curve; storing the compressed time domain curve for use in spectral rendering.

When performing spectral rendering frequency or wavelength dependent material properties such as the refractive index must typically be stored in the form of curves representing the change in the property with frequency or wavelength. A large number of values must be stored to store the full curve, significantly increasing the storage requirement compared to traditional RGB rendering in which only the values for red, green and blue need be stored. This requirement to store full frequency curves significant increases the storage demands and reduces the available storage for important graphical data such as textures and other assets. By obtaining the Fourier transform of the frequency dependent curve to provide a time domain curve, techniques from audio compression may be used to significantly reduce the storage requirements. In particular, since most of the important relevant variation in a time domain refractive index curve is typically confined to a small part of the curve, compression techniques may be readily applied to reduce the amount of data that may be stored, freeing up memory for other memory intensive aspects of the graphics rendering pipeline.

Preferably, applying a compression technique may comprise: removing a sequence of values below a threshold from the time domain curve to obtain a compressed time domain curve. In particular the method may comprise a threshold for the magnitude value of the refractive index. Where the magnitude of the refractive index drops below the value, data may be removed for storage. Reconstructing the full curve may then involve adding the removed sequence of values. Mapping data (equally referred to as reconstruction data) may be stored indicating the position and/or value of the samples to be added back to reconstruct the curve data.

In some examples removing a sequence of values below a threshold from the time domain curve comprises: removing a sequence of trailing zeros. A time domain refractive index curve will often have a sequence of trailing zeros. These can be removed when storing the curve. Decompressing (equivalently "reconstructing") the curve involves adding zero value samples up to a predetermined number of samples, representing a full curve.

In some examples applying a compression technique comprises: storing only a part of the time domain refractive index curve having variation above a threshold value. Often the time domain curve will only have significant variation in value within a small portion of the curve. In some examples only this portion may be stored in full. Approximately constant portions of the curve may be stored as data comprising a single value representing the value of the samples in the relevant portion. Mapping data may be stored indicating where the constant portion needs to be added for decompression.

In some examples, applying a compression technique comprises: storing finite difference between bands of the time domain refractive index curve, where within the bands the values are assumed to be constant. Time domain material property curves are characterised by one or more bands having an approximately constant value. These bands may be stored as a value representing the difference between bands. Mapping data may be stored indicating the start and end points of the bands. This data may be used to reconstruct the full curve.

In some examples, applying a compression technique comprises: performing a sparse representation technique to represent the time domain curve as a sparse set of basis functions. Many time domain curves exhibit sparsity, with only a small portion of the curve containing relevant information, in the form of variation in the refractive index curve. Such curves can be efficiently represented by a set of basis functions.

Preferably the method comprises: providing a plurality of refractive index curves for a plurality of materials to be rendered within the virtual environment, each refractive index curve encoding the variation of the refractive index with frequency for the respective material; applying a Fourier transform to each refractive index curve to obtain a plurality of time domain refractive index curves; determining a common element in the plurality of time domain refractive index curves; removing the common element from the plurality of time domain refractive index curves to obtain a set of compressed time domain refractive index curves; storing the common element and the set of compressed time domain refractive index curves for use in spectral rendering.

For spectral rendering the optical properties of a large number of materials, present in the virtual environment, must be stored for use in the pipeline. Many of these curves will be similar, and so compression techniques which rely on the similarity across the curves to compress the data may be used. In particular an element common across a plurality of curves may be extracted and only stored once. In some examples the common element may be parameterised to store different forms of the common element present in different curves. For example, just the relevant values of the relevant parameters may be stored for each curve in order to reconstruct the common element and add it to the curve.

In some examples the method comprises: determining a plurality of subsets of the plurality of time domain refractive index curves, each subset relating to a group of materials to be rendered having similar refractive properties; determining a common element for each subset of time domain refractive index curves; removing the common element from each subset of time domain refractive index curves to obtain a subset of compressed time domain refractive index curves; storing each common element and the respective subset of compressed time domain refractive index curves for use in spectral rendering. Similar materials are likely to have similar refractive index variation. By grouping the materials by type and applying respective compression techniques to each group, the most suited method to a particular form of curve can be used.

In a second aspect of the invention there is provided a computer implemented method of performing spectral rendering using a compressed refractive index curve to render a virtual scene, the method comprising: storing a compressed time domain refractive index curve for a material to be rendered within the virtual scene; retrieving the compressed time domain refractive index from a memory; performing spectral rendering to render the virtual scene by using the compressed time domain refractive index to simulate the interaction of light with the material within the virtual scene. By storing refractive index curves as time domain curves, compression techniques known from audio compression may be used to significantly reduce the amount of data to be stored. This can significantly improve performance when performing spectral rendering as more memory is free for other aspects of the rendering pipeline so there are less delays in loading assets to memory usable by the GPU.

The compressed time domain refractive index curve may be prepared using any method described above under the first aspect, in the appended claims, or elsewhere herein.

Preferably performing spectral rendering comprises: performing ray tracing by casting rays of a plurality of different wavelengths from a viewing position into the virtual scene; determining the intersection of an incident ray with the material to be rendered; calculating the properties of a reflected or transmitted ray using the compressed time domain refractive index and the properties of the incident ray. Ray tracing provides a particularly efficient method to implement ray tracing, which can benefit from the reduced storage requirements afforded by the methods of compressing the refractive index curve described herein.

Performing spectral rendering comprises: determining the intersection of an incident ray with the material to be rendered; convolving the time domain refractive index curve of the material to be rendered with all wavelengths of the incident ray to generate an output ray. A further advantage of converting the refractive index curve to a time domain curve is that it may be used in the form of a time domain filter and simply convolved with the wavelengths of a beam incident a material to calculate the outgoing beam. In this way, the processing requirement is also reduced as it is not necessary to perform an inverse transform to convert the time domain curve back into the frequency domain.

Preferably retrieving the compressed time domain refractive index from a memory comprises decompressing the compressed time domain refractive index to reconstruct the time domain refractive index curve. In particular, the inverse of the decompression method may be applied to obtain the full time domain curve. In some examples decompressing curve may comprise retrieving mapping data encoding instructions for decompressing the curve.

Preferably the method comprises storing the compressed time domain refractive index within a memory accessible by a video gaming system and performing spectral rendering at run time of the video gaming system to render a virtual environment within the video game. The present methods are particularly appliable to video gaming systems for run time rendering where the storage requirements are particularly high, such that the reduction in memory achieved by the current invention is particularly beneficial.

In another aspect of the invention there is provided a computer program comprising instructions that, when executed by a computer, cause the computer to perform the method of any of the above aspects.

In another aspect of the invention there is provided a computer-readable medium comprising instructions that, when executed by a computer, cause the computer to perform the method of any of the above aspects.

In another aspect of the invention there is provided a processor configured to perform the method of any of the above aspects.

Although in the above the invention has been defined as a method of compressing a refractive index curve, the refractive index curve may be replaced by any curve representing a frequency dependent property of a material, usable in spectral rendering for example a reflectance or transmittance curve.

### BRIEF DESCRIPTION OF DRAWINGS

Figure 1 illustrates a method flow diagram of a method according to the present invention;
Figure 2 illustrates a method flow diagram of a method according to the present invention;
Figure 3 illustrates a video gaming system according to the present invention;

### DETAILED DESCRIPTION

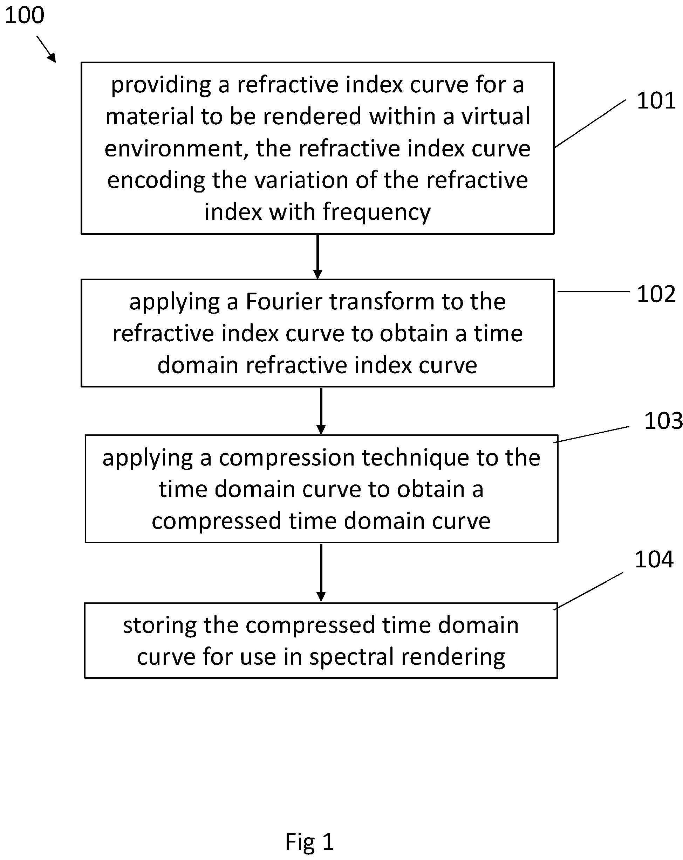

Figure 1 illustrates a computer implemented method 100 for compressing and storing a refractive index curve for use in spectral rendering according to the present invention. The method 100 comprises a first step 101 of providing a refractive index curve for a material to be rendered within a virtual environment, the refractive index curve encoding the variation of the refractive index with frequency; a second step 102 of applying a Fourier transform to the refractive index curve to obtain a time domain refractive index curve; a third step 103 of applying a compression technique to the time domain curve to obtain a compressed time domain curve; and a fourth step 104 of storing the compressed time domain curve for use in spectral rendering.

When implementing spectral rendering for rendering a scene, for example rendering a virtual environment within a video game, a significantly increased amount of data must be stored relative to conventional RGB rendering. In particular, rather than simply storing three refractive index values for red, green and blue wavelengths, a full refractive index curve must typically be stored to provide the full variation in refractive index of the material over the visible spectrum. Storing the required number of values to encode the full spectrum, for every material present in a virtual environment to be rendered, significantly increases the memory resources required. For example, several hundred values may be required to store a curve compared to the three values for the RGB indices. Thus reducing storage available for other graphical components required in the rendering pipeline, such as textures and other graphical assets. The present method alleviates this issue by compressing the refractive index curves to reduce the amount of memory required. In particular, the invention is centered on the recognition that, if converted to the time domain, refractive index curves can be compressed using techniques known from audio compression to significantly reduce the memory required to store the necessary data.

Spectral rendering involves sampling the entire spectrum of light wavelengths when modelling the interaction of light with objects and materials within a virtual environment. The relevant wavelength (or equivalently, frequency) dependent properties of each material need to be stored and used for simulating how light interacts with each object. In more detail, spectral rendering involves firstly defining the three-dimensional geometry of the scene to be rendered, including objects and constituent materials, lighting and the required view. Spectral rendering is then often implemented using ray tracing in which rays, with wavelengths across the visible spectrum, are cast from the position of the camera, through each pixel in the image plane into the virtual scene and allowed to propagate through the scene to reach the light source. Each time a ray intersects an object, the intersection point is determined and the material properties at the point are then used to calculate the properties of the reflected and transmitted rays, such as the relative intensities of the various frequencies. The colour value of each pixel is determined by the contribution of a plurality of rays traversing the scene between the relevant pixel and the light source.

Therefore, rather than in traditional RGB rendering where only three values of properties such as the refractive index need to be stored, for spectral rendering potentially hundreds of data values need to be stored to store the full refractive index curve, required for computing the contribution of a plurality of wavelengths across the spectrum of the incident light at each intersection point.

Each material within the scene may have a frequency dependent refractive index curve, providing the refractive index curve across a spectrum of frequencies. The sampling of the full curve will determine the number of values that must be stored but this could often be of the order of hundreds of values to capture the full variation with sufficient precision over the visible spectrum. In methods according to the present invention, the number of stored values can be compressed considerably by converting the frequency dependent curves to the time domain by applying a Fourier transform. The time domain curves have a similar shape to an impulse response and, as such, audio processing and compression techniques may be applied to reduce the number of values that need to be stored.

Usually, the changes in the time domain refractive index curve will be localized to one or more narrow bands such that much of the rest of the curve is relatively constant. In one example therefore, the time domain curve can be compressed by only storing a portion of the curve containing significant variation in the refractive index. For example, a portion of the curve that is approximately constant can be stored as a single value. In some examples, a first portion of the curve can be stored in full, with the value of the refractive index at each of a plurality of time values to capture the variation in the refractive index over those time values. A second portion of the curve can be stored as a single value, or in some cases, further data could be stored to define the start and end points of a constant band. For example, a constant band could be stored as a start time value, and end time value and a value of the refractive index over the band.

In some examples, a portion of the curve having a variation above a threshold is stored in full (i.e. at the default sampling precision, with the refractive index sampled regularly over the band). The remaining portion of the curve may be stored as one or more bands having a constant value. The threshold variation may be defined as a maximum amplitude within the band (i.e. maximum deviation between the minimum and maximum refractive index values within a certain band of the time domain curve). In this way, bands of the curve having a variation in the refractive index above this threshold and stored in full and remaining bands are stored in a compressed representation, for example as a single average value of the refractive index within that band, possibly with further data indicating the position of the band, such as by indicating the start and/or end point.

In the time domain refractive index curve a large number of the values may be close to zero, so in one example of the method, the time domain refractive index curve may be compressed by removing a sequence of values below a threshold from the curve. In particular, the method could comprise removing a sequence of trailing zeros from the time domain curve, i.e. removing a plurality of values of the refractive index that are at or close to zero. In one example the method may comprise removing all values that are below a certain threshold from the curve to store a reduced number of values representing just the main variation in the refractive index value. Further "mapping" data may be stored indicating which portion or portions of the curve have been removed, for example given a time value after which all remaining samples have been deleted. In this way, parts of the curve which are at or close to zero can be removed and simply added when reconstructing the curves for use during spectral rendering. In some examples, the curves may be of fixed known number of values (e.g. 512 values) such that when reconstructing the curves zeros may simply be added to adjust the curve to the required number of samples.

The time domain refractive index curve of certain materials comprises one or more bands of an approximately constant value. Therefore, in some examples of the method, the compression technique may involve storing the time domain refractive index curve as values representing a finite difference between bands of the curve. In particular the time domain refractive index curve maybe represented as a plurality of bands where the value within the bands are assumed to be constant such that the curve can simply be stored as finite differences between bands. For example, all or a portion of the curve may be stored as data representing one or more bands. The data may comprise the difference between values of the bands, and the position of the transition between bands.

Many other methods of compressing the data known from audio processing may be applied to compress the time domain for refractive index curves. In one example dimensionality reduction techniques may be used. In particular, the time domain curves may span a large number of samples, particularly when the curves are stored to high resolution. Dimensionality reduction methods such as principal components analysis (PCA) can be used to reduce dimensionality of the data by identifying the most significant components or modes of variation. The time domain refractive index curve can then be approximated using a reduced set of basis functions which have significantly reduced storage requirements compared to the full time domain refractive index curve. As described above, many time domain refractive index curves may exhibit sparsity, i.e. only a fraction of the samples contain significant values of the refractive index. Therefore, sparse representation techniques, such as compressed sensing or sparse coding can be used to encode the time domain curve using a sparse set of basis functions. Again this can allow for efficient compression of the curves while preserving the important features.

Since refractive index curves may need to be stored for a large number of objects and associated materials within the virtual environment, it may also be necessary to store a large number of refractive index curves. The methods for present invention can be extended to compress pluralities of refractive index curves, utilising similarities between the curves to efficiently store sets of refractive index curves for different materials and objects within a virtual scene. Again, initially a Fourier transform may be applied to each refractive index curve (corresponding to each material) to obtain a plurality of time domain refractive index curves. Then, a number of possible steps can be applied to compress the plurality of time to main curves. In one example a common element may be identified across some or all of the plurality of time domain refractive index curves. A common element may be a plurality of samples that are the same or similar across the time domain curves. This could be simply a sequence of samples that have the same value, for example a sequence of trailing zeros or a constant value. In other examples it may be a sequence of samples which have the same variation in values across a sequence of samples, for example a feature of the curve that has the same or similar shape (that could be at the same time value or a different time value). This common element may be extracted from each time domain refractive index curve to form a plurality of compressed time domain refractive index curves. The compressed refractive index curves may then be stored with the single common element to allow reconstruction of the full time domain refractive index curves when they are required for use, for example in spectral rendering.

Although in many examples the common elements are a sequence of values which is the same across the different time domain refractive index curves, in other examples it may be a series of samples that are spread across each time domain refractive index curve. For example a periodic or pattern of values across the curve may be the same or similar across a plurality of refractive index curves or similar materials. In these cases the common element will not be a sequence of values but a number of values spread across the curve. In this example the common element may be stored with mapping data identifying which values within the curve the common element corresponds to.

When performing spectral rendering and storing refractive index curves for a plurality of different objects or material types there will be certain types of material with similar refractive index curves. Therefore the above methods can be applied to different subsets of time domain refractive index curves. For example, plastic materials may have similar refractive index curves having a similar form of curve, whereas glass like materials may have a different form of refractive index curve. For this reason, time domain refractive index curves may be grouped together corresponding to their similarity and the type of material that they represent with one particular compression technique applied to one subset of time domain refractive index curves representing one type of material and another compression technique applied to a different subset of time domain refractive index curves.

Although the above examples focuses on the refractive index other frequency dependent material properties that need to be stored for use in spectral rendering may be compressed in a similar way, for example reflectance and transmittance curves. It would be appreciated that the above methods provide an efficient way to store a frequency dependent material property curve for use in spectral rendering.

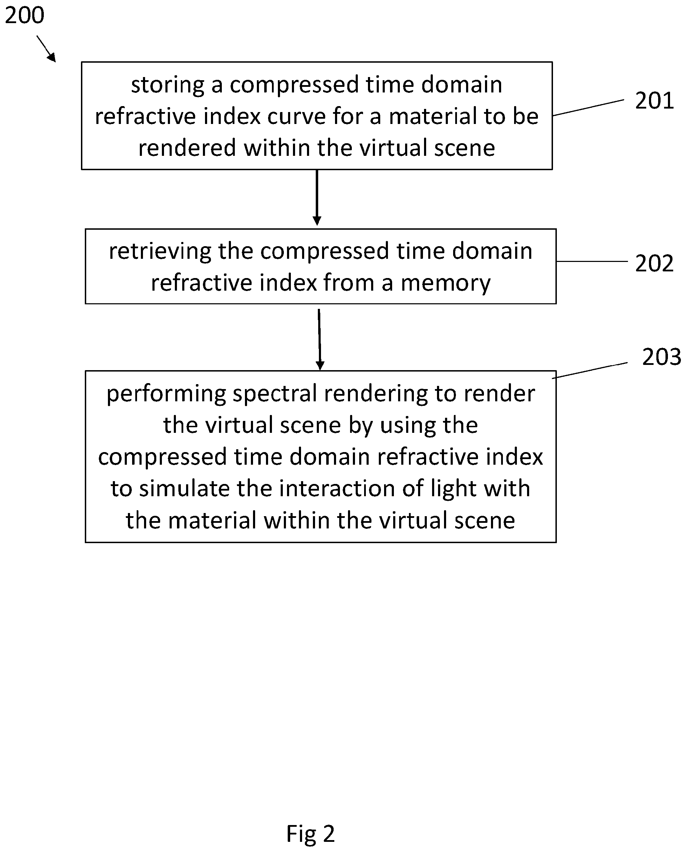

In a second, related aspect of the invention there is provided a method of performing spectral rendering using a compressed refractive index curve to render a virtual scene, as illustrated in Figure 2. The method comprises a first step 201 of storing a compressed time domain refractive index curve for a material to be rendered within the virtual scene; a second step two 202 of retrieving the compressed time domain refractive index curve; and a third step 203 of performing spectral rendering to render the virtual scene by using the compressed time domain refractive index curve to simulate the interaction of light with the material within the virtual scene.

Once the refractive index curves have been stored, using one of the methods as described above, they may be used in performing spectral rendering to render a scene. Spectral rendering may be performed in a number of different ways known in the art. As described above, in one example ray tracing may be used to determine the intersection of incident rays with materials in the scene to be rendered, retrieving properties of the materials and calculating the reflected or transmitted rays using the retrieved properties and the properties of the incident ray. The method may involve casting rays of a plurality of different wavelengths from an image plane into the virtual scene where plurality of rays may be cast for each pixel, then determining the intersection of those rays with objects in the scene and calculating the properties of the reflected or transmitted rays based on the stored properties of those materials. When it is determined that a ray has intersected with an object to be rendered, the properties of the associated material may be determined, in this case retrieving the compressed time domain refractive index curve and using the curve to calculate the impact on the reflected and/or transmitted ray.

One advantage of the present invention is that it is not necessary to convert the time domain refractive index curve back to the frequency domain in order to calculate an outgoing ray. In particular the time domain refractive index curve can be treated as a time domain filter and simply convolved with all wavelengths of an incident beam (i.e. ray) to generate the output. Treating the refractive index of a surface as a time domain filter in this way provides a particularly efficient method to calculate the spectral effects of a particular material on an incident ray while the utilising the above described methods of compressing the time domain refractive index.

The method may involve decompressing the compressed time domain refractive index curve to reconstruct the full time domain refractive index curve before using it to calculate the properties of a reflected or transmitted ray. The decompression techniques may generally involve applying the inverse of the compression technique. For example, when the time domain curve is compressed by removing a sequence of approximately constant values from the curve, these constant values may be added back in to create the full time domain curve for spectral rendering. As described above, in some examples mapping data (also referred to as decoding data) may be stored providing instructions on how to reconstruct the full time domain curve. For example the mapping data may provide the sample number after which a portion of the curve has being removed as well as the value that should be applied to those samples when reconstructing the curve. This can be extended by mapping data encoding a series of bands of different fixed value which can be added back in to the compressed refractive index curve to reconstruct the full time domain refractive index curve.

Where the curve has been compressed by removing a sequence of trailing zeros, zero values can be added to the end of the compressed time domain curve up to a set number of samples, representing the full curve. In this way, the full refractive index curve can be reconstructed. Similarly where the time domain refractive index curve is stored as finite differences between bands of constant value, mapping data (encoding the position of the finite differences within the curve) can be used to reconstruct the bands to create the full time domain refractive index curve.

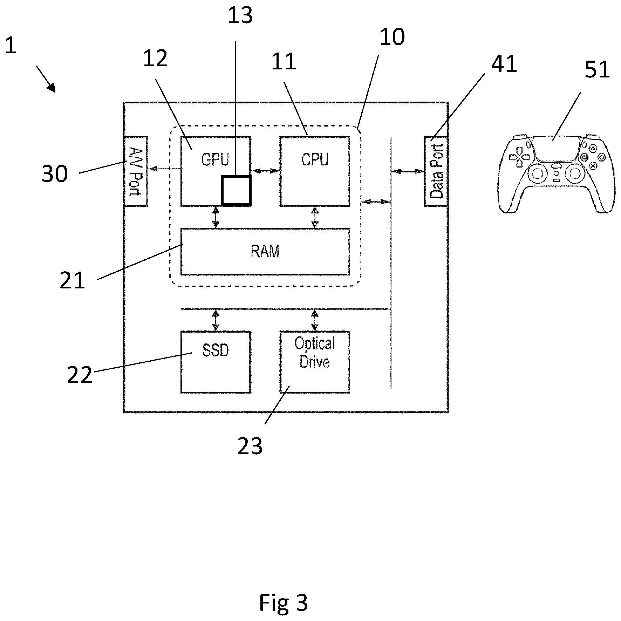

The methods of the present invention provide particular advantages when employed in a video gaming system for performing rendering of virtual environments in the context of video games. In particular, they allow for properties of materials within a virtual scene to be stored efficiently such that it may be used to perform real time spectral rendering of video game scenes. Figure 3 illustrates a video gaming system 1 usable to implement the methods of the present invention. The system includes a GPU 12 and a CPU 11, in this case combined into a combined processing unit 10. In other examples, the CPU could be more separate and not have access to the same shared RAM. The system 1 further includes storage such as an SSD memory 22 or optical drive 23 for storing game data.

As in a conventional rendering pipeline, based on the current game state, the CPU 11 generates rendering commands such as draw calls and state changes to send to the GPU 12. These commands specify how objects should be rendered including their position, orientation textures, shades and other rendering parameters. The GPU 12 executes these rendering commands received from the CPU 11 to generate the final image displayed on the screen after output via the AV port 30.

The rendering pipeline may comprise multiple stages such as vertex processing, primitive assembly, rasterisation, fragment shading and output merging. The data transfer between CPU 11 and GPU 12 may be managed via APIs with the CPU 11 sending rendering commands and the GPU 12 sending back the rendered frames to be displayed and output by the AV port 30. The active shaders are stored in a memory 13 usable by the GPU, herein referred at the "shader memory". The shader memory may be implemented in a number of different ways and provided by for example the video memory (VRAM) usable by the GPU. In the example of Figure 2 it maybe also stored in the joint RAM 21 usable by the GPU 12 and CPU 11.

In the context of the present invention, the compressed time domain curves may be stored within the game data, for example in the optical drive 23, RAM 21 or SSD 22. When performing spectral rendering the compressed time domain refractive index curve may be retrieved from memory and spectral rendering steps carried out by the processor 10, specifically the GPU 12 and/or CPU 11.

## Claims

1. A computer implemented method for compressing a refractive index curve for use in spectral rendering, the method comprising:
providing a refractive index curve for a material to be rendered within a virtual environment, the refractive index curve encoding the variation of the refractive index with frequency;
applying a Fourier transform to the refractive index curve to obtain a time domain refractive index curve;
applying a compression technique to the time domain curve to obtain a compressed time domain curve;
storing the compressed time domain curve for use in spectral rendering.

2. The method of claim 1 wherein applying a compression technique comprises:
removing a sequence of values below a threshold from the time domain curve to obtain a compressed time domain curve.

3. The method of claim 2 wherein removing a sequence of values below a threshold from the time domain curve comprises:
removing a sequence of trailing zeros.

4. The method of any preceding claim wherein applying a compression technique comprises:
storing only a part of the time domain refractive index curve having variation above a threshold value.

5. The method of any preceding claim wherein applying a compression technique comprises:
storing finite difference between bands of the time domain refractive index curve, where within the bands the values are assumed to be constant.

6. The method of any preceding claim wherein applying a compression technique comprises:
performing a sparse representation technique to represent the time domain curve as a sparse set of basis functions.

7. The method of any preceding claim wherein the method comprises:
providing a plurality of refractive index curves for a plurality of materials to be rendered within the virtual environment, each refractive index curve encoding the variation of the refractive index with frequency for the respective material;
applying a Fourier transform to each refractive index curve to obtain a plurality of time domain refractive index curves;
determining a common element in the plurality of time domain refractive index curves;
removing the common element from the plurality of time domain refractive index curves to obtain a set of compressed time domain refractive index curves;
storing the common element and the set of compressed time domain refractive index curves for use in spectral rendering; and optionally wherein the method comprises:
determining a plurality of subsets of the plurality of time domain refractive index curves, each subset relating to a group of materials to be rendered having similar refractive properties;
determining a common element for each subset of time domain refractive index curves;
removing the common element from each subset of time domain refractive index curves to obtain a subset of compressed time domain refractive index curves;
storing each common element and the respective subset of compressed time domain refractive index curves for use in spectral rendering.

8. A computer implemented method of performing spectral rendering using a compressed refractive index curve to render a virtual scene, the method comprising:
storing a compressed time domain refractive index curve for a material to be rendered within the virtual scene;
retrieving the compressed time domain refractive index from a memory;
performing spectral rendering to render the virtual scene by using the compressed time domain refractive index to simulate the interaction of light with the material within the virtual scene.

9. The method of claim 8 wherein the compressed time domain refractive index curve has been prepared according to any of claims 1 to 7.

10. The method of claim 8 or claim 9 wherein performing spectral rendering comprises:
performing ray tracing by casting rays of a plurality of different wavelengths from a viewing position into the virtual scene;
determining the intersection of an incident ray with the material to be rendered;
calculating the properties of a reflected or transmitted ray using the compressed time domain refractive index and the properties of the incident ray.

11. The method of any of claims 8 to 10 wherein performing spectral rendering comprises:
determining the intersection of an incident ray with the material to be rendered;
convolving the time domain refractive index curve of the material to be rendered with all wavelengths of the incident ray to generate an output ray.

12. The method of any of claims 8 to 11 wherein retrieving the compressed time domain refractive index from a memory comprises decompressing the compressed time domain refractive index to reconstruct the time domain refractive index curve.

13. The method of any of claims 8 to 12 wherein the method comprises storing the compressed time domain refractive index within a memory accessible by a video gaming system and performing spectral rendering at run time of the video gaming system to render a virtual environment within the video game.

14. A computer program comprising instructions that, when executed by a computer, cause the computer to perform the method of any preceding claim.

15. A computer-readable medium comprising instructions that, when executed by a computer, cause the computer to perform the method of any preceding claim.
